(19) Europäisches Patentamt
European Patent Office
Office européen des brevets

(11) EP 2 344 550 B1

(12) **EUROPEAN PATENT SPECIFICATION**

(45) Date of publication and mention of the grant of the patent:
**01.04.2015 Bulletin 2015/14**

(21) Application number: **09783888.2**

(22) Date of filing: **09.10.2009**

(51) Int Cl.:
***C08F 210/02*** *(2006.01)*
***C08J 5/18*** *(2006.01)*
***B29C 49/00*** *(2006.01)*
***B29K 105/00*** *(2006.01)*
***C08F 210/16*** *(2006.01)*
***C08F 4/659*** *(2006.01)*
***B29C 47/00*** *(2006.01)*

(86) International application number:
**PCT/EP2009/063166**

(87) International publication number:
**WO 2010/043560 (22.04.2010 Gazette 2010/16)**

(54) **COPOLYMERS AND FILMS THEREOF**

COPOLYMERE UND FOLIEN DARAUS

COPOLYMÈRES ET COUCHES CORRESPONDANTES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.10.2008 EP 08166574**

(43) Date of publication of application:
**20.07.2011 Bulletin 2011/29**

(73) Proprietor: **Ineos Sales (UK) Limited**
**Lyndhurst**
**Hampshire SO43 7FG (GB)**

(72) Inventors:
- **CHAI, Choon Kooi**
  **B-3090 Overijse (BE)**
- **LALANNE-MAGNE, Claudine Viviane**
  **F-13920 Saint Mitre les Remparts (FR)**
- **OSMONT, Eric**
  **13500 Martigues (FR)**

(74) Representative: **Hawkins, David George**
**Mathisen & Macara LLP**
**Communications House**
**South Street**
**Staines-upon-Thames, Middx TW18 4PR (GB)**

(56) References cited:
**EP-A- 1 935 909**
**EP-A1- 0 877 051**
**WO-A-94/14855**
**WO-A-2006/085051**
**WO-A1-02/055569**
**WO-A1-2004/000919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 344 550 B1

## Description

The present invention relates to novel copolymers and in particular to novel copolymers of ethylene and higher alpha-olefins having C7 - C12 carbon atoms in particular to copolymers of ethylene and 1-octene and also to films produced from said copolymers.

In recent years there have been many advances in the production of polyolefin copolymers due to the introduction of metallocene catalysts. Metallocene catalysts offer the advantage of generally higher activity than traditional Ziegler catalysts and are usually described as catalysts which are single-site in nature. Because of their single-site nature the polyolefin copolymers produced by metallocene catalysts often are quite uniform in their molecular structure. For example, in comparison to traditional Ziegler produced materials, they have relatively narrow molecular weight distributions (MWD) and narrow Short Chain Branching Distribution (SCBD).

Although certain properties of metallocene products are enhanced by narrow MWD, difficulties are often encountered in the processing of these materials into useful articles and films relative to Ziegler produced materials. In addition, the uniform nature of the SCBD of metallocene produced materials does not readily permit certain structures to be obtained.

Recently a number of patents have published directed to the preparation of films based on low density polyethylenes prepared using metallocene catalyst compositions.

EP 608369 describes copolymers having a melt flow ratio ($I_{10}/I_2$) of ≥ 5.63 and a molecular weight distribution (MWD) satisfying the relationship MWD ≤($I_{10}/I_2$) - 4.63. The copolymers are described as elastic substantially linear olefin polymers having improved processability and having between 0.01 to 3 long chain branches per 1000 C atoms and show the unique characteristic wherein the $I_{10}/I_2$ is essentially independent of MWD.

WO 94/14855 discloses linear low density polyethylene (LLDPE) films prepared using a metallocene, alumoxane and a carrier. The metallocene component is typically a bis (cyclopentadienyl) zirconium complex exemplified by bis (n-butylcyclopentadienyl) zirconium dichloride and is used together with methyl alumoxane supported on silica. The LLDPE's are described in the patent as having a narrow Mw/Mn of 2.5-3.0, a melt flow ratio (MFR) of 15-25 and low zirconium residues.

WO 94/26816 also discloses films prepared from ethylene copolymers having a narrow composition distribution. The copolymers are also prepared from traditional metallocenes (eg bis (1-methyl, 3-n-butylcyclopentadienyl) zirconium dichloride and methylalumoxane deposited on silica) and are also characterised in the patent as having a narrow Mw/Mn values typically in the range 3-4 and in addition by a value of Mz/Mw of less than 2.0.

However, it is recognised that the polymers produced from these types of catalyst system have deficiencies in processability due to their narrow Mw/Mn. Various approaches have been proposed in order to overcome this deficiency. An effective method to regain processability in polymers of narrow Mw/Mn is by the use of certain catalysts which have the ability to incorporate long chain branching (LCB) into the polymer molecular structure. Such catalysts have been well described in the literature, illustrative examples being given in WO 93/08221 and EP-A-676421.

WO 97/44371 discloses polymers and films where long chain branching is present and the products have a particularly advantageous placement of the comonomer within the polymer structure. Polymers are exemplified having both narrow and broad Mw/Mn, for example from 2.19 up to 6.0, and activation energy of flow, which is an indicator of LCB, from 7.39 to 19.2 kcal/mol (31.1 to 80.8kJ/mol). However, there are no examples of polymers of narrow Mw/Mn, for example less than 3.4, which also have a low or moderate amount of LCB, as indicated by an activation energy of flow less than 11.1 kcal/mol (46.7kJ/mol).

WO 00/68285 exemplified copolymers of ethylene and alpha-olefins having molecular weight distributions in the range 2.3 to 3.2, melt index of 1.02 - 1.57 and activation energies of about 32 kJ/mol. The copolymers were most suitable for use in the application of films showing good processability, improved optical and mechanical properties and good heat sealing properties. The copolymers were suitably prepared in the gas phase by use of monocyclopentadienyl metallocene complexes.

EP 1360213 describes metallocene film resins having good mechanical properties, excellent optical properties and very good extrusion potential. The resins exhibit melt indices $MI_2$ the range 0.001 to 150 g/10 min and a high Dow Rhelogy Index (DRI) of at least $20/MI_2$. The resins are suitably prepared from ethylene bis(4,5,6,7-tetrahydro-1-indenyl) zirconium dichloride/MAO catalyst systems.

EP 1260540 and EP 1225201 similarly disclose polymers having DRI of at least $8/MI_2$ and $5/MI_2$ respectively.

US 5674342 describes ethylene polymers having a DRI of at least 0.1 and preferably at least 0.3 and a melt flow ratio ($I_{10}/I_2$) in the range 8 to about 12. Specifically exemplified polymers exhibit DRI in the range 0.3 - 0.7 and molecular weight distributions (Mw/Mn) in the range 2.15 - 3.4.

WO 04/000919 describes films from LLDPE having a ratio of MD tear to TD tear of ≥ 0.9. The films are based on copolymers produced from hafnium metallocene catalysts systems, the reported films however have dart impacts of ≤ 690 g (1013 g/mil).

WO 06/085051 describes copolymers of ethylene and alpha-olefins having broader molecular weight distributions (Mw/Mn) in the range 3.5 to 4.5. These copolymers exhibited a melt elastic modulus G' (G"= 500 Pa) in the range 40 to 150 Pa and an activation energy of flow (Ea) in the range 28 - 45 kJ/mol but which had low or moderate amounts of LCB.

WO 08/074689 describes copolymers of ethylene and alpha-olefins having a much lower Dow Rheology Index (DRI) but with a more balanced processability with improved properties particularly those suitable for preparing films with an excellent balance of processing, optical and mechanical properties.

The copolymers described and exemplified in these prior art publications have typically been copolymers of ethylene and $\alpha$-olefins having C4 - C6 carbon atoms for example 1-butene, 1-hexene and 4-methyl-1 pentane.

We have now surprisingly found that copolymers comprising ethylene and higher $\alpha$-olefins, in particular having C7 to C12 carbon atoms and most preferably having C8 carbon atoms, show improved processability having properties particularly suitable for preparing films with an excellent balance of processing, optical and mechanical properties. In particular blown films exhibit an excellent combination of MD tear strength, TD tear strength and dart drop impact.

Thus according to a first aspect of the present invention there is provided a copolymer of ethylene and a $\alpha$-olefin having C7 to C12 carbon atoms, said copolymer having

(a) a density (D) in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of $\geq$ 220 g
a tear strength (TD) of $\geq$ 470g, and
a Dart Drop Impact (DDI) of $\geq$ 1800g

of a blown film having a thickness of 25 $\mu$m produced from the copolymer, where MD is referred to the machine direction and TD is the transverse direction of the blown film.

For the avoidance of doubt all references to density refer to the non-annealed density unless otherwise stated.

The novel polymers of the present invention may also be defined by means of their Composition Distribution Breadth Index (CDBI) which has been well defined, for example in US 5206075 and PCT publication WO93/03090, as a measure of the composition distribution. The CDBI may be suitably determined by means of Temperature Rising Elution Fractionation (TREF).

The novel copolymers of the present invention exhibit a relationship between the Composition Distribution Breadth Index (CDBI) and density (D) that satisfy the relationship of

$$\mathrm{CDBI} \leq (-\,192\,\mathbf{D} + 241.5)$$

The novel copolymers of the present invention typically exhibit a CDBI in the range 50 - 63%.

The novel copolymers of the present invention also exhibit a comonomer partitioning factor $C_{pf} \geq 1.20$.

The aforementioned WO 97/44371 describes the comonomer partitioning factor Cpf the relevant parts of which are incorporated herein by reference.

The copolymers preferably have a density in the range 0.910 - 0.935 g/cm$^3$ and most preferably in the range 0.915 -0.925 g/cm$^3$

The copolymers preferably have a melt index in the range 0.05 - 20 g/10 min and most preferably in the range 0.5 - 5 g/10 min.

The copolymers preferably have a melt elastic modulus G' (G" = 500Pa) in the range 35 - 80 Pa. and most preferably in the range 35 - 45 Pa.

The copolymers preferably have an activation energy of flow (Ea) in the range 28 - 45 kJ/mol.

The copolymers typically have a molecular weight distribution in the range 2.5 - 4.5 and preferably in the range 3.0 - 4.0.

The preferred $\alpha$-olefin of the present invention has C8 carbon atoms and comprises 1-octene.

The novel copolymers of the present invention may suitably be prepared by use of a metallocene catalyst system comprising, preferably a monocylcopentadienyl metallocene complex having a 'constrained geometry' configuration together with a suitable activator.

Examples of monocyclopentadienyl or substituted monocyclopentadienyl complexes suitable for use in the present invention are described in EP 416815, EP 418044, EP 420436 and EP 551277.

Suitable complexes may be represented by the general formula:

$CpMX_n$

wherein Cp is a single cyclopentadienyl or substituted cyclopentadienyl group optionally covalently bonded to M through a substituent, M is a Group VIA metal bound in a $\eta^5$ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Preferred monocyclopentadienyl complexes have the formula:

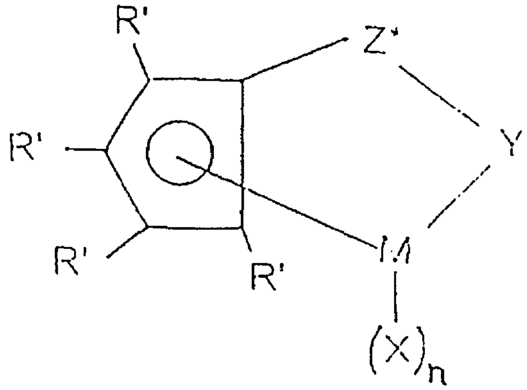

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,
Y is -O-, -S-, -NR*-, -PR*-,
M is hafnium, titanium or zirconium,
Z* is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system,
and n is 1 or 2 depending on the valence of M.

Examples of suitable monocyclopentadienyl complexes are (tert-butylamido) dimethyl (tetramethyl-$\eta^5$- cyclopentadienyl) silanetitanium dichloride and (2-methoxyphenylamido) dimethyl (tetramethyl-$\eta^5$- cyclopentadienyl) silanetitanium dichloride.

Particularly preferred metallocene complexes for use in the preparation of the copolymers of the present invention may be represented by the general formula:

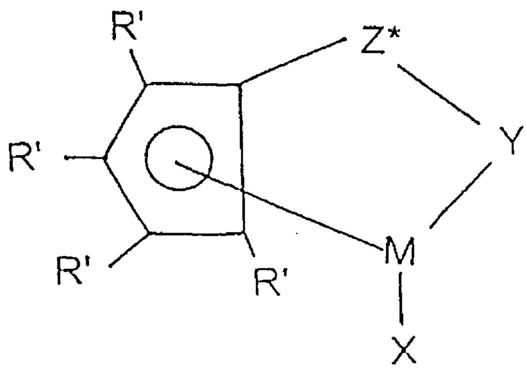

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;
X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 formal oxidation state;
Z* is $SiR^*_2$, $CR^*_2$, $SiR^*_2SiR^*_2$, $CR^*_2CR^*_2$, CR*=CR*, $CR^*_2SiR^*_2$, or
$GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

Examples of suitable X groups include s-trans-$\eta^4$-1,4-diphenyl-1,3-butadiene, s-trans-$\eta^4$-3-methyl-1,3-pentadiene; s-trans-$\eta^4$-2,4-hexadiene; s-trans-$\eta^4$-1,3-pentadiene; s-trans-$\eta^4$-1,4-ditolyl-1,3-butadiene; s-trans-$\eta^4$-1,4-bis{trimethylsilyl)-1,3-butadiene; s-cis-$\eta^4$-3-methyl-1,3-pentadiene; s-cis-$\eta^4$-1,4-dibenzyl-1,3-butadiene; s-cis-$\eta^4$-1,3-pentadiene; s-cis-$\eta^4$-1,4-bis(trimethylsilyl)-1,3-butadiene, said s-cis diene group forming a $\pi$-complex as defined herein with the metal.
Most preferably R' is hydrogen, methyl, ethyl, propyl, butyl, pentyl, hexyl, benzyl, or phenyl or 2 R' groups (except hydrogen) are linked together, the entire $C_5R'_4$ group thereby being, for example, an indenyl, tetrahydroindenyl, fluorenyl, terahydrofluorenyl, or octahydrofluorenyl group.
Highly preferred Y groups are nitrogen or phosphorus containing groups containing a group corresponding to the formula -N(R//)- or -P(R//)- wherein R// is $C_{1-10}$ hydrocarbyl.
Most preferred complexes are amidosilane - or amidoalkanediyl complexes.
Most preferred complexes are those wherein M is titanium.
Specific complexes are those disclosed in WO 95/00526 and are incorporated herein by reference.
A particularly preferred complex is (t-butylamido) (tetramethyl-$\eta^5$-cyclopentadienyl) dimethyl silanetitanium -$\eta^4$-1.3 -pentadiene.
Suitable cocatalysts for use in the preparation of the novel copolymers of the present invention are those typically used with the aforementioned metallocene complexes.
These include aluminoxanes such as methyl aluminoxane (MAO), boranes such as tris(pentafluorophenyl) borane and borates.
Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon.
A preferred aluminoxane is methyl aluminoxane (MAO).
Other suitable cocatalysts are organoboron compounds in particular triarylboron compounds. A particularly preferred triarylboron compound is tris(pentafluorophenyl) borane.
Other compounds suitable as cocatalysts are compounds which comprise a cation and an anion. The cation is typically a Bronsted acid capable of donating a proton and the anion is typically a compatible non-coordinating bulky

species capable of stabilizing the cation.

Such cocatalysts may be represented by the formula:

$$(L^*\text{-}H)^+_d\ (A^{d-})$$

wherein:-

L* is a neutral Lewis base
$(L^*\text{-}H)^+_d$ is a Bronsted acid
$A^{d-}$ is a non-coordinating compatible anion having a charge of $d^-$, and
d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylanilinium cations such as N,N-dimethylanilinium cations.

The preferred ionic compounds used as cocatalysts are those wherein the cation of the ionic compound comprises a hydrocarbyl substituted ammonium salt and the anion comprises an aryl substituted borate.

Typical borates suitable as ionic compounds include:

triethylammonium tetraphenylborate
triethylammonium tetraphenylborate,
tripropylainmonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the metallocene complexes comprise ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:

triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogentated tallow alkyl) methylammonium and similar.

Particular preferred cocatalysts of this type are alkylammonium tris(pentafluorophenyl) 4-(hydroxyphenyl) borates. A particularly preferred cocatalyst is bis(hydrogenated tallow alkyl) methyl ammonium tris (pentafluorophenyl) (4-hydroxyphenyl) borate.

With respect to this type of cocatalyst, a preferred compound is the reaction product of an alkylammonium tris(pentaflurophenyl)-4-(hydroxyphenyl) borate and an organometallic compound, for example triethylaluminium or an aluminoxane such as tetraisobutylaluminoxane.

The catalysts used to prepare the novel copolymers of the present invention may suitably be supported.

Suitable support materials include inorganic metal oxides or alternatively polymeric supports may be used for example polyethylene, polypropylene, clays, zeolites, etc.

The most preferred support material for use with the supported catalysts according to the method of the present invention is silica. Suitable silicas include Ineos ES70 and Grace Davison 948 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere under reduced pressure.

The porous supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

Particularly suitable catalysts for use in the preparation of the copolymers of the present invention are metallocene complexes which have been treated with polymerisable monomers. Our earlier applications WO 04/020487 and WO 05/019275 describe supported catalyst compositions wherein a polymerisable monomer is used in the catalyst preparation.

Polymerisable monomers suitable for use in this aspect of the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene.

Alternatively a combination of one or more monomers may be used for example ethylene and 1-hexene.

The preferred polymerisable monomer is 1-hexene.

The polymerisable monomer is suitably used in liquid form or alternatively may be used in a suitable solvent. Suitable solvents include for example heptane.

The polymerisable monomer may be added to the cocatalyst before addition of the metallocene complex or alternatively the complex may be pretreated with the polymerisable monomer.

The novel copolymers of the present invention may suitably be prepared in processes performed in either the slurry or the gas phase.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

The novel copolymers are most suitably prepared in a gas phase process.

Gas phase processes for the polymerisation of olefins, especially for the homopolymerisation and the copolymerisation of ethylene and $\alpha$-olefins for example 1-butene, 1-hexene, 4-methyl-1-pentene are well known in the art.

Typical operating conditions for the gas phase are from 20°C to 100°C and most preferably from 40°C to 85°C with pressures from subatmospheric to 100 bar.

Preferred gas phase processes are those operating in a fluidised bed. Particularly preferred gas phase processes are those operating in "condensed mode" as described in EP 89691 and EP 699213 the latter being a particularly preferred process.

By "condensed mode" is meant the "process of purposefully introducing a recycle stream having a liquid and a gas phase into a reactor such that the weight percent of liquid based on the total weight of the recycle stream is typically greater than about 2.0 weight percent".

The novel copolymers of the present invention may thus be suitably prepared by the copolymerisation of ethylene with $\alpha$-olefins having C7 - C12 carbon atoms.

The most preferred $\alpha$-olefin is 1-octene.

Thus according to another preferred aspect of the present invention there is provided a method for the preparation of copolymers of ethylene and $\alpha$-olefins having C7 - C12 carbon atoms having:

(a) a density (D) in the range 0.900 - 0.940 g/cm$^3$,
(b) a melt index $MI_2$ (2.16 kg, 190°C) in the range of 0.01 - 50 g/10 min, and
(c) a melt elastic modulus G' (G"= 500 Pa) in the range 20 to 150 Pa

said method comprising copolymerising ethylene and the $\alpha$-olefin in the presence of a catalyst system as hereinbefore described.

The most preferred $\alpha$-olefin is 1-octene.

The copolymers are particularly suitable for the production of films and sheets prepared using traditional methods well known in the art. Examples of such methods are film blowing, film casting and orientation of the partially crystallised product. The films exhibit good balance of processability, optical and mechanical properties and good heat sealing properties.

The copolymers are particularly suitable for the production of blown films.

The films typically exhibit a tear strength (MD) of ≥ 220g and more preferably ≥ 240g and a tear strength (TD) ≥ 470g and more preferably ≥ 475g; where MD is referred to the machine direction and TD is the transverse direction of the blown film of thickness 25 $\mu$m.

The films typically exhibit a Dart Drop Impact (DDI) of a 25 $\mu$m film thickness of ≥ 1800g, and more preferably ≥ 2000g and most preferably ≥ 2200g.

The films typically also exhibit a 1% secant modulus (MD) of ≥ 200 MPa and a 1% secant modulus (TD) of ≥ 170 MPa; where MD is again referred to the machine direction and TD is the transverse direction of the blown film.

The films may be suitable for a number of applications for example industrial, retail, food packaging, non-food packaging and medical applications. Examples include films for bags, garment bags, grocery sacks, merchandise bags, self-serve bags, grocery wet pack, food wrap, pallet stretch wrap, bundling and overwrap, industrial liners, refuse sacks, heavy duty bags, agricultural films, daiper liners, etc.

The films may also be utilised as shrink film, cling film, stretch film, sealing film or other suitable type of film.

The novel copolymers of the present invention are however particularly suitable for use in the manufacture of blown films.

Thus according to another aspect of the present invention there is provided a blown film comprising a copolymer of ethylene and an $\alpha$-olefin having C7 to C12 carbon atoms, said copolymer having :

(a) a density in the range 0.900 - 0.940 g/cm$^3$,
(b) a melt index $MI_2$ (2.16 kg, 190°C) in the range of 0.01 - 50 g/10 min, and
(c) a melt elastic modulus G' (G"= 500 Pa) in the range 20 to 150 Pa

wherein said film when having a thickness of 25 $\mu$m exhibits :

a tear strength (MD) of ≥ 220 g
a tear strength (TD) of ≥ 470 g, and
a Dart Drop Impact (DDI) ≥ 1800 g

wherein MD is referred to the machine direction and TD is the transverse direction of the film.

The films of the present invention show an excellent balance of processing, optical and mechanical properties compared with films prepared from prior art copolymers in particular form copolymers of ethylene and 1-hexene. In particular the blown films of the present invention exhibit an excellent combination of MD tear strength, TD tear strength and dart drop impact.

The present invention will now be further illustrated with reference to the following examples:

Examples 1 and 2

A supported catalyst was prepared according to the general procedure described in the aforementioned WO 06/085051 and WO 08/074689. The catalyst comprised the following components:

support material - silica D984 (Grace-Davison)
metallocene - $(C_5Me_4SiMe_2N^tBu)Ti(h^4$-1,3-pentadiene) premixed with 1-hexene
activator - $[N(H)Me(C_{18-22}H_{37-45})_2][B(C_6F_5)_3(p\text{-}OHC_6H_4)]$

Details of the final catalyst composition was as follows:

| Parameter | Catalyst |
|---|---|
| | |
| Ti loading (mmol/g) | 48.2 |
| B:Ti ratio | 1.07 |
| Al:B (TEA:activator) | 1.00 |

(continued)

| Parameter | Catalyst |
|---|---|
| hexene:Ti ratio | 35 |
| Stadis content (ppm) | 500 |

**Polymerisations**

Polymerization of ethylene and 1-octene was carried out continuously using the above catalyst system in a fluidized bed gas phase reactor of 0.74 m diameter with a vertical section of 7 m. The polymerisation conditions are shown below in Table 1 for the preparation of two etlaylene/1-octene copolymers and also for the preparation of an ethylene/1-hexene copolymer as comparative example 3 (CE3).

**TABLE 1**

| Condition | Example 1 | Example 2 | CE3 |
|---|---|---|---|
| | | | |
| Reaction Temperature (°C) | 76 | 80 | 74 |
| C2 partial pressure (bar) | 11.2 | 12.5 | 13.0 |
| H2 partial pressure (bar) | 0.034 | 0.035 | 0.0533 |
| C8 partial pressure (bar) | 0.027 | 0.023 | |
| C6 partial pressure (Bar) | | | 0.0857 |
| C5 (pentane) partial pressure (bar) | 2.51 | 2.5 | 2.4 |
| Residence time (hrs) | 2.9 | 4.2 | 6.4 |
| Condensation rate wt (%) | 2.7 | 1.4 | 6.0 |

**Product Characteristics**

The product characteristics of Examples 1 and 2 are shown below in Table 2.

**TABLE 2**

| Property | Example 1 | Example 2 |
|---|---|---|
| | | |
| Non - annealed Density (g/cm$^3$) | 0.918 | 0.918 |
| $MI_2$ (2.16 kg/190°C) | 1.13 | 1.07 |
| Melt elastic modulus G'(G"= 500Pa) Pa | 39.9 | 39.60 |
| Activation energy of flow Ea (kJ/mol) | 34.1 | 35.3 |
| CDBI (%) | | 54.06 |
| $C_{pf}$ | | 1.38 |
| Mw/Mn (Standard GPC - uncorrected for LCB) | 3.0 | 3.3 |

**Methods of test**

**Melt index** (190/2.16) was measured according to ISO 1133.

**Density** (non-annealed) was measured using a density column according to ISO 1872/1 method except that the melt index extrudates were conditioned on a plastic plaque for 30 minutes at 23°C before immersion in the density gradient columns. 2 samples were taken, and put in the density gradient column. The density value of the sample that sunk deeper was taken after 20 minutes.

**Density** (annealed) was measured using a density column according to ISO 1872/1 method except that the melt index extrudates were annealed in boiling water for 30 minutes. It was then cooled down in the water without further heating for 60 minutes. 2 samples were taken, washed with isopropanol and put in the density gradient column. The density value of the sample that sunk deeper was taken after 20 minutes.

**Standard Gel Permeation Chromatographs Analysis for Molecular Weight Distribution (Mw/Mn) determination**

Apparent molecular weight distribution and associated averages, uncorrected for long chain branching, were determined by Gel Permeation Chromatography using a GPCV 2000 from Waters. Acquisition is done using Alliance software from the same supplier. The apparatus settings were the following:

Column temperature: 150°C
Injector temperature: 150°C
Pump temperature: 50°C
Injection volume: 217,5 μl
Elution time: 60 min
Eluant: 1,2,4 Trichlorobenzene stabilised with 0.05% BHT
Flow rate: 1 ml/min
Columns set: 2 Shodex AT806MS + 1 Waters HT2 with a plate count (at half height) of typically 26,000
Detector: differential refractometer

Prior the elution, the polyethylene samples were dissolved at 150°C for 2 hours with stirring in 1,2,4 Trichlorobenzene stabilised with 0.05% BHT. The polyethylene concentration is 0.1 % w/w.

A relative calibration was constructed using narrow polystyrene standards. The molecular weight and the solution concentrations are listed in the below table.

| PS Standard (Vial number) | Molecular weight (PS) | Polydispersity (PD) | Mass (mg) for 30 ml of solvent |
|---|---|---|---|
| **1** | 76600 | 1.03 | 34.125 |
| **2** | 3900000<br>50400 | 1.05<br>1.03 | 6.75<br>42.75 |
| **3** | 1950000<br>30300 | 1.04<br>1.02 | 8.625<br>42.75 |
| **4** | 995000<br>21000 | 1.04<br>1.02 | 8.625<br>42.75 |
| **5** | 488400<br>9860 | 1.05<br>1.02 | 17.25<br>51.375 |
| **6** | 195000<br>2100 | 1.02<br>1.05 | 25.5<br>68.25 |

The elution volume, V, was recorded for each PS standards.

The PS molecular weight was converted in PE equivalent using the following Mark Houwink constants:

$\alpha_{PS} = 0.67$ $K_{PS} = 0.000175$

$\alpha_{PE} = 0.706$ $K_{PE} = 0.00051$

The calibration curve $Mw_{PE} = f(V)$ was then fitted with a 3rd polynomial equation. All the calculations are done with Millennium 32 software from Waters.

This calibration has been checked against the NIST certified polyethylene BRPE0 the values obtained being 53,000 for Mw and 19,000 for Mn.

**Dynamic rheological measurements** are carried out, according to ASTM D 4440, on a dynamic rheometer (e.g., ARES) with 25 mm diameter parallel plates in a dynamic mode under an inert atmosphere. For all experiments,

the rheometer has been thermally stable at 190°C for at least 30 minutes before inserting the appropriately stabilised (with antioxidant additives), compression-moulded sample onto the parallel plates. The plates are then closed with a positive normal force registered on the meter to ensure good contact. After about 5 minutes at 190°C, the plates are lightly compressed and the surplus polymer at the circumference of the plates is trimmed. A further 10 minutes is allowed for thermal stability and for the normal force to decrease back to zero. That is, all measurements are carried out after the samples have been equilibrated at 190°C for about 15 minutes and are run under full nitrogen blanketing.

Two strain sweep (SS) experiments are initially carried out at 190°C to determine the linear viscoelastic strain that would generate a torque signal which is greater than 10% of the lower scale of the transducer, over the full frequency (e.g. 0.01 to 100 rad/s) range. The first SS experiment is carried out with a low applied frequency of 0.1 rad/s. This test is used to determine the sensitivity of the torque at low frequency. The second SS experiment is carried out with a high applied frequency of 100 rad/s. This is to ensure that the selected applied strain is well within the linear viscoelastic region of the polymer so that the oscillatory rheological measurements do not induce structural changes to the polymer during testing. In addition, a time sweep (TS) experiment is carried out with a low applied frequency of 0.1 rad/s at the selected strain (as determined by the SS experiments) to check the stability of the sample during testing.

**Measurement of Melt Elastic Modulus G'(G"=500 Pa) at 190°C:**

The frequency sweep (FS) experiment is then carried out at 190°C using the above appropriately selected strain level and the dynamic rheological data thus measured are then analysed using the rheometer software (viz., Rheometrics RHIOS V4.4 or Orchestrator Software) to determine the melt elastic modulus **G**'(G" = 500 Pa) at a constant, reference value (500 Pa) of melt viscous modulus (G").

**Flow Activation Energy (Ea) Measurement**

The bulk dynamic rheological properties (e.g., G', G" and η*) of all the polymers were then measured at 170°, 190° and 210°C. At each temperature, scans were performed as a function of angular shear frequency (from 100 to 0.01 rad/s) at a constant shear strain appropriately determined by the above procedure.

The dynamic rheological data was then analysed using the Rheometrics Software. The following conditions were selected for the time-temperature (t-T) superposition and the determination of the flow activation energies ($\mathbf{E}_a$) according to an Arrhenius equation, aT = exp ($\mathbf{E}_a$/kT), which relates the shift factor ($\mathbf{a}_T$) to $\mathbf{E}_a$:

| | |
|---|---|
| Rheological Parameters: | G'(ω), G"(ω) & η*(ω) |
| Reference Temperature: | 190°C |
| Shift Mode: | 2D (i.e., horizontal & vertical shifts) |
| Shift Accuracy: | High |
| Interpolation Mode: | Spline |

**Determination of CDBI (as Determined by Temperature Rising Elution Fractionation (TREF).**

Temperature Rising Elution Fractionation (TREF), as described for example in Wild et al., J. Poly. Sci., Poly. Phys. Ed., vol. 20, p. 441 (1982), is a technique used for the analysis of the comonomer (composition) distribution in semi-crystalline polymers and more specifically for the analysis of the short chain branching distribution (SCBD) in linear low density polyethylene (LLDPE) and tacticity in polypropylene (PP).

In particular, the TREF solubility distribution curve for a copolymer can be readily used to determine a "Composition Distribution Breadth Index" ("CDBI") which has been defined (e.g., in US Patent No. 5206075 and PCT publication WO93/03090) as a measure of composition distribution. The solubility distribution curve is a plot of the weight fraction of the copolymer that is solubilised as a function of temperature. This is then converted to a weight fraction versus composition distribution curve, where the CDBI is determined by establishing the weight percentage of a sample that has comonomer content within 50% of the median comonomer content on each side of the median. It is also commonly assumed that all fractions have Mn ≥ 15000 in the CDBI measurement for simplifying the correlation of composition with elution temperature.

The TREF apparatus was supplied by the PolymerChar Company with the following components:

- A special oven to perform the crystallization and elution temperature ramps. An Agilent GC 7890 oven which is split in two parts: the top oven (where the Valco valves, a vapor sensor are installed) and the main oven where the five 60 mL vessels as well as the TREF column are installed. The polymer samples are dissolved in these vessels.
- The TREF column, size: 7.8 mm (internal diameter) x 15 cm (length), packed with stainless steal beads (HPLC

column).

◦ An infrared detector.
◦ A dispenser (25 mL syringe).
◦ An Agilent Isocratic 1200 series pump.
◦ A 2.5 L solvent bottle (TCB).
◦ A 2.5 L waste bottle for the contaminated solvent.
◦ A computer with the software developed by PolymerChar to program analysis, for acquisition and data processing.

| | |
|---|---|
| Equipment | |
| Column size (mm) | 7.8 (diameter) x 150 (length) |
| Solvent | TCB |
| Packing beads | Stainless steel |
| Detector | IR |
| Wavelength ($\mu$m) | 3.42 |
| Sample preparation | |
| Concentration of the PE solution (mg/ml) | 3.2 |
| Injected volume on the column (ml) | 0.4 |
| Dissolution temperature (°C) | 150 |
| Crystallization step | |
| Temperature range (°C) | 95 - 35 |
| Crystallization rate (°C/min) | 0.5 |
| Annealed time (min) | 20 min at 35°C |
| Elution step | |
| Elution rate (ml/min) | 0.5 (continuous) |
| Temperature range (°C) | 35 - 120 |

**Determination of $C_{pf}$**

**(a) Comonomer or Short Chain Blanching (SCB) Distribution by GPC/FTIR**

Measurement of Comonomer (SCB) Content vs. Molecular Weight

The comonomer content as a function of molecular weight was measured by coupling a Nicolet ESP protégé 460 Fourier transform infrared spectrometer (FTIR) to Polymer Laboratories (PL 210) Gel Permeation Chromatograph (GPC) with a transfer line thermally controlled at 160°C. The setting up, calibration and operation of this system together with the method for data treatment are summarised below:

Preparation of polymer solution (in a heat block with constant agitation)

◦ Polymer Concentration: 2 g/l (20 mg in a vial of 10 ml)
◦ Solvent: 1,2,4 trichlorobenzene « dry » of Biosolve and stabilized with BHT (ionol CP) at 0.2 g/l
◦ Dissolution temperature: 160 °C
◦ Duration : 1 h (30 minutes without agitation and 30 minutes with agitation at 150 revolutions/minute)

GPC Conditions (PL 210 Polymer Laboratories)

- Columns set: 2 PL mixed-B (30 cm length 30; 10 μm beads; 5 μm sintered)
- Mobile Phase: 1,2,4 trichlorobenzene « dry » of Biosolve and non-stabilised
- Oven Temperature: 160°C
- Flow rate : 1 ml/ min
- Injection Volume: 500 μl
- Transfer line temperature: 160 °C.

FTIR (Nicolet Protégé 460) Spectrometer

Flow cell commercialised by PL Laboratories and placed inside the Nicolet spectrometer:

- Flow cell volume: 70 μl
- Flow cell path: 1 mm
- Flow cell window : calcium fluoride
- FTIR Detector: InSb cooled by liquid nitrogen
- Number of scan : 16
- Resolution : 4 $cm^{-1}$
- Spectral Range: 3000 to 2700 $cm^{-1}$

Software

Software acquisition spectres: OMNIC (version 6.0) from Thermo-Nicolet Software exploitation: CIRRUS from Polymer Laboratories (Cirrus GPC/multidetector 2001-2003).

Calibration

The apparent molecular weights, and the associated averages and distribution, uncorrected for long chain branching, were determined by Gel Permeation Chromatography using a PL210, with 2 PL mixed-B and a FTIR (InSb) detector. The solvent used was 1,2,4 Trichlorobenzene at 160°C, which is stabilised with BHT, of 0.2g/litre concentration and filtered with a 0.45μm Osmonics Inc. silver filter. Polymer solutions of 2.0 g/litre concentration were prepared at 160°C for one hour with stirring only at the last 30 minutes. The nominal injection volume was set at 500μl and the nominal flow rate was 1 ml/min.
A relative calibration was constructed using 10 narrow molecular weight linear polystyrene standards:

| PS Standard | Molecular Weight |
|---|---|
| 1 | 7 500 000 |
| 2 | 2 560 000 |
| 3 | 841 700 |
| 4 | 280 500 |
| 5 | 143 400 |
| 6 | 63 350 |
| 7 | 31 420 |
| 8 | 9 920 |
| 9 | 2 930 |
| 10 | 580 |

The elution volume, V, was recorded for each PS standards. The PS molecular weight was then converted to PE equivalent using the following Mark Houwink parameters $\mathbf{k}_{ps}$ =1.21 x $10^{-4}$, $\alpha_{ps}$ = 0.707, $\mathbf{k}_{pe}$= 3.92x $10^{-4}$, $\alpha_{pe}$ = 0.725. The calibration curve $Mw_{PE}$ = f(V) was then fitted with a first order linear equation.

Calibration IR for Short Chain Branching (SCB)

The chemometric model employed within the Polymer Laboratories Softwares (e.g., CIRRUS, GPC/Multidetector) involved the calibration of the FTIR detector using Standards, including the following:

| Standard | $CH_3$/1000 C |
|---|---|
| CF24-7 | 15.4 |
| CF24-10 | 11.1 |
| CF 25-24 | 9.4 |
| CF25-1 | 1.3 |
| CF25-3 | 2.7 |
| CF25-5 | 3.7 |
| CF25-6 | 4.2 |

In order to characterize the degree to which the comonomer is concentrated in the high molecular weight part of the polymer, the GPC/FTIR data were used to calculate a parameter named comonomer partitioning factor, $C_{pf}$.

**(b) Comonomer Partitioning Factor ($C_{pf}$)**

The comonomer partitioning factor ($C_{pf}$) is calculated from GPC/FTIR data, as has previously been described in WO 97/44371 which is herein incorporated by reference. It characterizes the ratio of the average comonomer content of the higher molecular weight tractions to the average comonomer content of the lower molecular weight fractions. Higher and lower molecular weight are defined as being above or below the median molecular weight respectively, that is, the molecular weight distribution is divided into two parts of equal weight. $C_{pf}$ is calculated from the following Equation:

$$C_{pf} = \frac{\dfrac{\sum_{i=1}^{n} w_i \cdot c_i}{\sum_{i=1}^{n} w_i}}{\dfrac{\sum_{j=1}^{m} w_j \cdot c_j}{\sum_{j=1}^{m} w_j}}$$

where $c_i$ is the mole fraction comonomer content and $w_i$ is the normalized weight fraction as determined by GPC/FTIR for the n FTIR data points above the median molecular weight. $c_j$ is the mole fraction comonomer content and wj is the normalized weight fraction as determined by GPC/FTIR for the m FTIR data points below the median molecular weight. Only those weight fractions, $w_i$ or $w_j$ which have associated mole fraction comonomer content values are used to calculate $C_{pf}$. For a valid calculation, it is required that n and m are greater than or equal to 3. FTIR data corresponding to molecular weight fractions below 5,000 are not included in the calculation due to the uncertainties present in such data.

**Film Characteristics**

Blown films of 25 μm thickness were prepared from the copolymers prepared in the above examples 1 and 2 of the invention. The details of the extrusion conditions and the mechanical and optical properties of the resultant films are given below in Table 3. Comparative films based on examples 5 and 6 of WO 08/074689 (CE1 and CE2) and also CE3 described above are shown below in Table 4.

**Dart Drop Impact** strength (DDI) was measured by ASTM D1709-98 (Method A), using a Tufnol (Carp Brand to BS.6128) 60g Dart Head and the diameter of the incremental weights is equal to the diameter of the dart head (38.10

mm), **haze** by ASTM D1003, **gloss** (45°) by ASTM D2457, **tear strength** (Elmendorf) by ASTM 1922, **tensile properties** and **secant modulus** (1%) according to ISO 1184.

**TABLE 3**

| Copolymer | | Example 1 | Example 2 |
|---|---|---|---|
| Non - annealed density (pellets) g/cm$^3$ | | 0.918 | 0.918 |
| MI (2.16) g/10min (pellets) | | 1.13 | 1.07 |
| Extrusion parameters | | | |
| Melt pressure (bar) | | 221 | 227 |
| Melt temperature (°C) | | 216 | 215 |
| Motor load (A) | | 80 | 73 |
| Screw speed (rpm) | | 55 | 58 |
| Air temperature (°C) | | 24 | 19 |
| Specific output (calculated from Output/Motor load (kg/h/A)) | | 0.63 | 0.68 |
| Mechanical properties | | | |
| Dart Drop Impact (g) | | 2075 | 2208 |
| Elmendorf tear strength (g) | MD | 243 | 221 |
| | TD | 485 | 477 |
| Tensile stress at yield (MPa) | MD | 10.8 | |
| | TD | 10.9 | |
| Tensile stress at break (MPa) | MD | 65.7 | |
| | TD | 66.8 | |
| Elongation at break (%) (MPa) | MD | 570 | |
| | TD | 678 | |
| Secant modulus 1% (MPa) | MD | 210 | |
| | TD | 178 | |
| Optical properties | | | |
| Haze (%) | | 11.3 | 10.2 |
| Gloss 45° (%) | | 51.5 | 58.3 |

**TABLE 4**

| Copolymer | | CE 1 | CE 2 | CE3 |
|---|---|---|---|---|
| Annealed density (pellets) g/cm$^3$ | | 0.921 | 0.919 | 0.918* |
| MI (2.16) g/10min (pellets) | | 1.3 | 1.24 | 2.00 |
| Extrusion parameters | | | | |
| Melt pressure (bar) | | 163 | 184 | 190 |
| Melt temperature (°C) | | 216 | 216 | 197 |
| Motor load (A) | | 70 | 76 | 71 |
| Screw speed (rpm) | | 54 | 54 | 55 |
| Air temperature (°C) | | 18 | 18 | 21 |
| Specific output (calculated from Output/Motor load (kg/h/A)) | | 0.71 | 0.66 | 0.70 |
| Mechanical properties | | | | |
| Dart Drop Impact (g) | | 1550 | 1707 | 1602 |
| Elmendorf tear strength (g/25μm) | MD | 235 | 216 | 284 |
| | TD | 470 | 445 | 519 |
| Tensile stress at yield (MPa) | MD | 10.9 | 9.6 | |
| | TD | 10.3 | 9.7 | |

(continued)

| Copolymer | | CE 1 | CE 2 | CE3 |
|---|---|---|---|---|
| Tensile stress at break (MPa) | MD | 64.9 | 66.0 | |
| | TD | 60.8 | 60.5 | |
| Elongation at break (%) (MPa) | MD | 588 | 566 | |
| | TD | 697 | 669 | |
| Secant modulus 1% (MPa) | MD | 164 | 155 | |
| | TD | 168 | 166 | |
| Optical properties | | | | |
| Haze (%) | | 8.8 | 6.0 | 20.0 |
| Gloss 45° (%) | | 62 | 69 | 53.5 |
| *Note: density reported for CE3 is non-annealed | | | | |

**Extruder & extrusion characteristics**

Extruder:

| | |
|---|---|
| CMG (Costruzione Meccaniche Gallia) 1200 TSA | |
| Screw diameter | 55mm |
| Screw L/D ratio | 30 |
| Die diameter/gap | 150/2.2 mm |
| Screen pack | flat |

Extrusion:

Temperature profile:

| | |
|---|---|
| Screw | 200/210/210/210/210°C |
| Die | 210/210/220/225°C |
| Output | 50kg/h |
| Take-off speed | 30m/min |
| Blow-up ratio | 2.5:1 |
| Frostline height | 430mm |
| Film thickness | 25μm |

**Claims**

**1.** A copolymer of ethylene and an α-olefin having C7 to C12 carbon atoms, said copolymer having

(a) a density (D) in the range 0.900 - 0.940 g/cm$^3$,
(b) a melt index $MI_2$ (2.16 kg, 190°C) in the range of 0.01 - 50 g/10 min,
(c) a melt elastic modulus G' (G"= 500 Pa) in the range 20 to 150 Pa, and
(d) a tear strength (MD) of ≥ 220 g,
a tear strength (TD) of ≥ 470 g, and
a Dart Drop Impact (DDI) of ≥ 1800 g

of a blown film having a thickness of 25 μm produced from the copolymer, where MD is referred to the machine direction and TD is the transverse direction of the blown film.

**2.** A copolymer according to claim 1 wherein the copolymer has a Compositional Distribution Breadth Index (CDBI) in % satisfying the equation

$$CDBI \leq (-192D + 241.5)$$

**3.** A copolymer according to either of preceding claims having a comonomer partitioning factor Cpf ≥ 1.20.

**4.** A copolymer according to any of the preceding claims wherein the density (D) is in the range 0.910 - 0.935 and preferably in the range 0.915 - 0.925.

**5.** A copolymer according to any of the preceding claims wherein the melt index $MI_2$ is in the range 0.05 - 20 g/10 min and preferably in the range 0.5 - 5 g/10 min.

**6.** A copolymer according to any of the preceding claims wherein the Dart Drop Impact (DDI) is ≥ 2000 g and preferably ≥ 2200 g.

**7.** A copolymer according to any of the preceding claims wherein the melt elastic modulus G' (G"= 500 Pa) in the range 35 to 80 Pa and preferably in the range 35 - 45 Pa.

**8.** A copolymer according to any of the preceding claims having an activation energy of flow (Ea) in the range 28 - 45 kJ/mol.

**9.** A copolymer according to any of the preceding claims wherein the molecular weight distribution (MWD) is in the range 2.5 - 4.5 and preferably in the range 3.0 - 4.0.

**10.** A copolymer according to any of the preceding claims wherein the α-olefin is 1-octene.

**11.** A copolymer according to any of the preceding claims prepared by polymerization in the presence of a metallocene catalyst system.

**12.** A copolymer according to claim 11 wherein the metallocene catalyst system comprises a monocyclopentadienyl metallocene complex.

**13.** A copolymer according to claim 12 wherein the metallocene complex has the general formula:

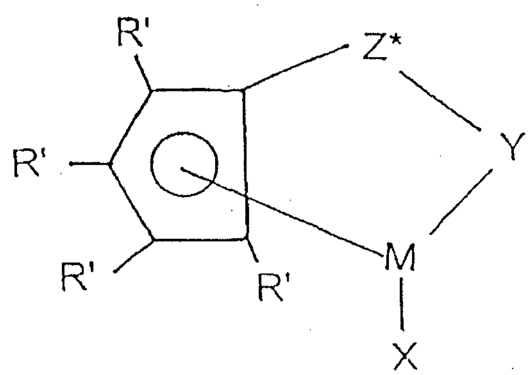

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the

cyclopentadienyl ring to form a fused ring structure;
X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 formal oxidation state;
Z* is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

**14.** A copolymer according to claim 11 wherein the polymerization is performed in the gas phase.

**15.** A copolymer according to claim 14 wherein the gas phase polymerization is performed in a fluidised bed reactor.

**16.** A film comprising a copolymer of ethylene and an $\alpha$-olefin having C7 to C12 carbon atoms according to any of the preceding claims.

**17.** A blown film comprising a copolymer of ethylene and an $\alpha$-olefin having C7 to C12 carbon atoms, said copolymer having

(a) a density in the range 0.900 - 0.940 g/cm$^3$,
(b) a melt index $MI_2$ (2.16 kg, 190°C) in the range of 0.01 - 50 g/10 min, and
(c) a melt elastic modulus G' (G"= 500 Pa) in the range 20 to 150 Pa

wherein said film when having a thickness of 25 $\mu$m exhibits :

a tear strength (MD) of ≥ 220 g
a tear strength (TD) of ≥ 470 g, and
a Dart Drop Impact (DDI) ≥ 1800 g
wherein MD is referred to the machine direction and TD is the transverse direction of the film.

**18.** A blown film according to claim 17 wherein the $\alpha$-olefin is 1-octene.

**Patentansprüche**

**1.** Copolymer aus Ethylen und einem $\alpha$-Olefin mit C7 bis C12 Kohlenstoffatomen, wobei das Copolymer aufweist:

(a) eine Dichte (D) im Bereich von 0,900 bis 0,940 g/cm$^3$,
(b) einen Schmelzindex $MI_2$ (2,16 kg, 190 °C) im Bereich von 0,01 bis 50 g/10 min,
(c) einen Schmelzelastizitätsmodul G' (G" = 500 Pa) im Bereich von 20 bis 150 Pa, und
(d) eine Reißfestigkeit (MD) von ≥ 220 g,
eine Reißfestigkeit (TD) von ≥ 470 g, und
eine Durchstoßfestigkeit (DDI) von ≥ 1800 g

bei einer aus dem Copolymer produzierten Blasfolie mit einer Dicke von 25 $\mu$m, wobei sich MD auf die Maschinenrichtung bezieht und TD die Querrichtung der Blasfolie ist.

**2.** Copolymer nach Anspruch 1, wobei das Copolymer einen Breitenindex der Zusammensetzungsverteilung (CDBI) in % hat, der die folgende Gleichung erfüllt:

$$CDBI \leq (-192D + 241{,}5)$$

**3.** Copolymer nach einem der vorhergehenden Ansprüche mit einem Comonomer-Partitionierungsfaktor Cpf ≥ 1,20.

4. Copolymer nach einem der vorhergehenden Ansprüche, wobei die Dichte (D) im Bereich von 0,910 bis 0,935 und vorzugsweise im Bereich von 0,915 bis 0,925 liegt.

5. Copolymer nach einem der vorhergehenden Ansprüche, wobei der Schmelzindex $MI_2$ im Bereich von 0,05 bis 20 g/10 min und vorzugsweise im Bereich von 0,5 bis 5 g/10 min liegt.

6. Copolymer nach einem der vorhergehenden Ansprüche, wobei die Durchstoßfestigkeit (DDI) ≥ 2000 g und vorzugsweise ≥ 2200 g beträgt.

7. Copolymer nach einem der vorhergehenden Ansprüche, wobei der Schmelzelastizitätsmodul G' (G" = 500 Pa) im Bereich von 35 bis 80 Pa und vorzugsweise im Bereich von 35 bis 45 Pa liegt.

8. Copolymer nach einem der vorhergehenden Ansprüche mit einer Aktivierungsenergie des Flusses (Ea) im Bereich von 28 bis 45 kJ/Mol.

9. Copolymer nach einem der vorhergehenden Ansprüche, wobei die Molekulargewichtsverteilung (MWD) im Bereich von 2,5 bis 4,5 und vorzugsweise im Bereich von 3,0 bis 4,0 liegt.

10. Copolymer nach einem der vorhergehenden Ansprüche, wobei das α-Olefin 1-Octen ist.

11. Copolymer nach einem der vorhergehenden Ansprüche, hergestellt durch Polymerisation in Gegenwart eines Metallocenkatalysatorsystems.

12. Copolymer nach Anspruch 11, wobei das Metallocenkatalysatorsystem einen Monocyclopentadienyl-Metallocenkomplex umfasst.

13. Copolymer nach Anspruch 12, wobei der Metallocenkomplex die folgende allgemeine Formel hat:

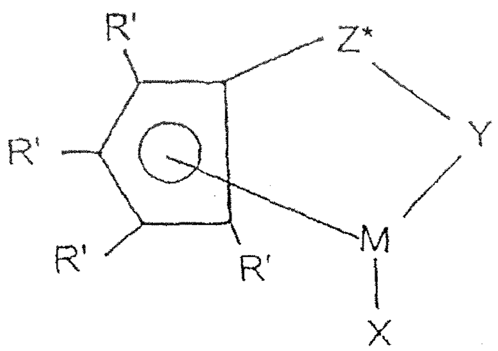

wobei:

R' bei jedem Vorkommen unabhängig ausgewählt ist aus Wasserstoff, Kohlenwasserstoff, Silyl, Germyl, Halogen, Cyano und Kombinationen davon, wobei das R' bis zu 20 Nicht-Wasserstoffatome aufweist, und gegebenenfalls zwei R'-Gruppen (wobei R' nicht Wasserstoff, Halogen oder Cyano ist) zusammen ein zweiwertiges Derivat davon bilden, das an benachbarte Positionen des Cyclopentadienylrings gebunden ist, um eine kondensierte Ringstruktur zu bilden;
X eine neutrale $\eta^4$-gebundene Diengruppe mit bis zu 30 Nicht-Wasserstoffatomen ist, die einen π-komplex mit M bildet;
Y -O-, -S-, -NR*-, -PR*- ist;
M Titan oder Zirkonium im formalen Oxidationszustand +2 ist;
Z* $SiR^*_2$, $CR^*_2$, $SiR^*_2SiR^*_2$, $CR^*_2CR^*_2$, $CR^*=CR^*$, $CR^*_2SiR^*_2$ oder $GeR^*_2$ ist, wobei:

R* bei jedem Auftreten unabhängig Wasserstoff oder ein Mitglied ausgewählt aus Kohlenwasserstoff, Silyl, halogeniertem Alkyl, halogeniertem Aryl und Kombinationen davon ist, wobei das

R* bis zu 10 Nicht-Wasserstoffatome aufweist, und gegebenenfalls zwei R*-Gruppen von Z* (wenn R* nicht Wasserstoff ist) oder eine R*-Gruppe von Z* und eine R*-Gruppe von Y ein Ringsystem bilden.

**14.** Copolymer nach Anspruch 11, wobei die Polymerisation in der Gasphase durchgeführt wird.

**15.** Copolymer nach Anspruch 14, wobei die Gasphasenpolymerisation in einem Wirbelbettreaktor durchgeführt wird.

**16.** Folie, umfassend ein Copolymer aus Ethylen und einem $\alpha$-Olefin mit C7 bis C12 Kohlenstoffatomen gemäß einem der vorhergehenden Ansprüche.

**17.** Blasfolie, umfassend ein Copolymer aus Ethylen und einem $\alpha$-Olefin mit C7 bis C12 Kohlenstoffatomen, wobei das Copolymer aufweist:

(a) eine Dichte im Bereich von 0,900 bis 0,940 g/cm$^3$,
(b) einen Schmelzindex $MI_2$ (2,16 kg, 190°C) im Bereich von 0,01 bis 50 g/10 min, und
(c) einen Schmelzelastizitätsmodul G' (G" = 500 Pa) im Bereich von 20 bis 150 Pa, wobei die Folie, wenn sie eine Dicke von 25 $\mu$m hat, Folgendes aufweist:

eine Reißfestigkeit (MD) von $\geq$ 220 g,
eine Reißfestigkeit (TD) von $\geq$ 470 g, und
eine Durchstoßfestigkeit (DDI) $\geq$ 1800 g

wobei MD die Maschinenrichtung bezeichnet und TD die Querrichtung der Folie ist.

**18.** Blasfolie nach Anspruch 17, wobei das $\alpha$-Olefin 1-Octen ist.

**Revendications**

**1.** Copolymère d'éthylène et d'$\alpha$-oléfine ayant des atomes de carbone en C7-C 12, ledit copolymère ayant

(a) une masse volumique (D) dans la gamme de 0,900 à 0,940 g/cm$^3$,
(b) un indice de fusion $MI_2$ (2,16 kg, 190 °C) dans la gamme de 0,01 à 50 g/10 min,
(c) un module d'élasticité en fusion G' (G" = 500 Pa) dans la gamme de 20 à 150 Pa, et
(d) une résistance à la déchirure (MD) de $\geq$ 220 g,
une résistance à la déchirure (TD) de $\geq$ 470 g, et
une résistance au choc au mouton de $\geq$ 1800 g

d'un film soufflé ayant une épaisseur de 25 $\mu$m produit à partir du copolymère, où MD est relatif à la direction de la machine et TD est la direction transversale du film soufflé.

**2.** Copolymère selon la revendication 1, dans lequel le copolymère a un % d'indice d'étendue de distribution de composition (en anglais, *Compositional Distribution Breadth Index* (CDBI)] satisfaisant à l'équation

$$CDBI \leq (-192D + 241,5)$$

**3.** Copolymère selon l'une quelconque des revendications précédentes, ayant un facteur de répartition des comonomères Cpf $\geq$ 1,20.

**4.** Copolymère selon l'une quelconque des revendications précédentes, dans lequel la masse volumique (D) est comprise dans la gamme de 0,910 à 0,935 et, de préférence, dans la gamme de 0,915 à 0,925.

**5.** Copolymère selon l'une quelconque des revendications précédentes, dans lequel l'indice de fluidité à chaud $MI_2$ est dans la gamme de 0,05 à 20 g/10 min et, de préférence, dans la gamme de 0,5 à 5 g/10 min.

**6.** Copolymère selon l'une quelconque des revendications précédentes, dans lequel l'impact de résistance au choc

au mouton est ≥ 2000 g et de préférence ≥ 2200 g.

**7.** Copolymère selon l'une quelconque des revendications précédentes, dans lequel le module d'élasticité en fusion G' (G" = 500 Pa) est dans la gamme de 35 à 80 Pa et, de préférence, dans la gamme de 35 à 45 Pa.

**8.** Copolymère selon l'une quelconque des revendications précédentes, ayant une énergie d'activation (Ea) d'écoulement dans la gamme de 28 à 45 J/mol K.

**9.** Copolymère selon l'une quelconque des revendications précédentes, dans lequel la distribution de poids moléculaire (MWD) est dans la gamme de 2,5 à 4,5 et, de préférence, dans la gamme de 3.0 à 4,0.

**10.** Copolymère selon l'une quelconque des revendications précédentes, dans lequel l'$\alpha$-oléfine est le 1-octène.

**11.** Copolymère selon l'une quelconque des revendications précédentes, préparé par polymérisation en présence d'un système de catalyseur à métallocène.

**12.** Copolymère selon la revendication 11, dans lequel le système de catalyseur à métallocène comprend un complexe monocyclopentadiényle métallocène.

**13.** Copolymère selon la revendication 12, dans lequel le complexe métallocène répond à la formule générale :

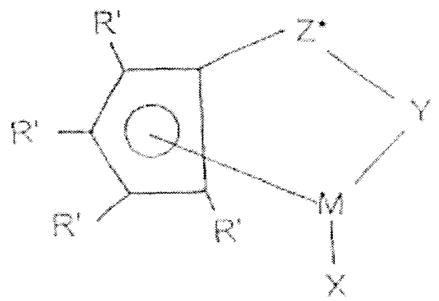

où:

R' à chaque occurrence est indépendamment choisi parmi l'hydrogène, les groupes hydrocarbyle, silyle, germyle, halogène, cyano, et leurs combinaisons, lesdits R' ayant jusqu'à 20 atomes non hydrogène, et facultativement, deux groupes R' (où R' n'est pas l'hydrogène, un groupe halogène ou cyano) forment ensemble un dérivé divalent de ceux-ci relié à des positions adjacentes du cycle cyclopentadiényle pour former une structure de cycle condensé ;
X est un groupe diène lié $\eta^4$ neutre ayant jusqu'à 30 atomes non hydrogène, qui forme un complexe n avec M ;
Y est -O-, -S-. -NR*-, -PR*-,
M est le titane ou le zirconium dans l'état d'oxydation formel + 2 ;
Z* est $SiR^*_2$, $CR^*_2$, $SiR^*_2SiR^*_2$, $CR^*_2CR^*_2$, CR*=CR*, $CR^*_2SiR^*_2$ ou
$GeR^*_2$, où :

R* à chaque occurrence est indépendamment l'hydrogène, ou un élément choisi parmi les groupes hydrocarbyle, silyle, alkyle halogéné, aryle halogéné, et leurs combinaisons, lesdits
R* ayant jusqu'à 10 atomes non hydrogène, et facultativement, deux groupes R* provenant de Z* (lorsque R* n'est pas l'hydrogène) ou un groupe R* provenant de Z* et un groupe R* provenant de Y forment un système de cycle.

**14.** Copolymère selon la revendication 11, dans lequel la polymérisation est effectuée en phase gazeuse.

**15.** Copolymère selon la revendication 14, dans lequel la polymérisation en phase gazeuse est effectuée dans un réacteur à lit fluidisé.

**16.** Film comprenant un copolymère d'éthylène et une $\alpha$-oléfine ayant des atomes de carbone en C7-C12 selon l'une quelconque des revendications précédentes.

**17.** Film soufflé comprenant un copolymère d'éthylène et une $\alpha$-oléfine ayant des atomes de carbone en C7-C12, ledit copolymère ayant

(a) une masse volumique dans la gamme de 0,900 à 0,940 g/$cm^3$,
(b) un indice de fluidité à chaud $MI_2$ (2,16 kg, 190 °C) dans la gamme de 0,01 à 50 g/10 min. et
(c) un module d'élasticité en fusion G' (G" = 500 Pa) dans la gamme de 20 à 150 Pa, dans lequel ledit film, lorsqu'il a une épaisseur de 25 $\mu$m, présente:
(d) une résistance à la déchirure (MD) de ≥ 220 g,
une résistance à la déchirure (TD) de ≥ 470 g, et
une résistance au choc au mouton de ≥ 1800 g

dans lequel MD se réfère à la direction de la machine et TD est la direction transversale du film.

**18.** Film soufflé selon la revendication 17, dans lequel l'$\alpha$-oléfine est le 1-octène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 608369 A
- WO 9414855 A
- WO 9426816 A
- WO 9308221 A
- EP 676421 A
- WO 9744371 A
- WO 0068285 A
- EP 1360213 A
- EP 1260540 A
- EP 1225201 A
- US 5674342 A
- WO 04000919 A
- WO 06085051 A
- WO 08074689 A
- US 5206075 A
- WO 9303090 A
- EP 416815 A
- EP 418044 A
- EP 420436 A
- EP 551277 A
- WO 9500526 A
- WO 9827119 A
- WO 04020487 A
- WO 05019275 A
- EP 89691 A
- EP 699213 A

### Non-patent literature cited in the description

- **WILD et al.** *J. Poly. Sci., Poly. Phys. Ed.,* 1982, vol. 20, 441